# EUROPEAN PATENT SPECIFICATION

(11) **EP 3 977 248 B1**
(45) Date of publication and mention of the grant of the patent: **03.07.2024**
(21) Application number: 20822021.0
(22) Date of filing: 11.05.2020
(51) Int. Cl.: G06F 9/451, G06F 3/0481, H04L 51/04, G06F 9/48, G06F 9/4401

(54) **MOBILE TERMINAL FOR MANAGING ONE OR MORE RECENTLY USED APPLICATIONS, AND A METHOD FOR SAME**
MOBILES ENDGERÄT ZUR VERWALTUNG EINER ODER MEHRERER KÜRZLICH VERWENDETER ANWENDUNGEN UND VERFAHREN DAFÜR
TERMINAL MOBILE POUR GÉRER UNE OU PLUSIEURS APPLICATIONS RÉCEMMENT UTILISÉES, ET PROCÉDÉ ASSOCIÉ

(30) Priority: 12.06.2019 IN 201941023203
(43) Date of publication of application: 06.04.2022
(73) Proprietor: GUANGDONG OPPO MOBILE TELECOMMUNICATIONS CORP., LTD., Wusha, Chang'an Dongguan Guangdong 523860 (CN)
(72) Inventor: TIWARY, Sumit Kumar, Hitec City, Madhapur, Hyderabad 500081 (IN); KUMAR, Manoj, Hitec City, Madhapur, Hyderabad 500081 (IN); SINGH, L Prithviraj, Hitec City, Madhapur, Hyderabad 500081 (IN)
(74) Representative: Ipside
(86) International application number: PCT/CN2020/089664
(87) International publication number: WO 2020/248751

(56) References cited:
- KR-A- 20160 090 709
- US-A1- 2017 357 413

## Description

### TECHNICAL FIELD

The present disclosure relates generally to management of one or more recently used applications in a mobile terminal.

### BACKGROUND

This section is intended to provide information relating to general state of the art and thus any approach/functionality described herein below should not be assumed to be qualified as a prior art merely by its inclusion in this section.

With the advent of technology, mobile terminals are no longer ordinary communications devices they used to be. The cumulative progress of mobile technology, the availability and access to high speed internet and the remarkable communicative interface in these devices results into a whole level of new and innovative experience mobile computing, which is made possible through various applications executed by a mobile terminal.

In order to manage various applications running on a mobile terminal, an application management system is used which manages operation and execution of the applications. For example, recently used applications in a mobile terminal are managed by a Recent Application Management System (RAMS). Conventionally, the RAMS uses an image of only the last activity screen of an application which was active on a display of the mobile terminal. A list of recent screens is maintained by the RAMS, wherein an image of the last used screen of all the applications which were recently used, are stored. The moment an active application is pushed into background from a foreground by an operating system of the mobile terminal, the RAMS uses only one screen of the application, which is typically the last used screen of that application.

However, there are several drawbacks associated with the conventional Recent Application Management System, RAMS. Since, an image of only last used screen of the applications are included in the recently used applications list, a user is only able to see activities performed by the user on the last screen of the applications. There is a limitation that a user won't be able to know or see the activities performed by the user on a second last screen or screens other than the last screen because only the image of the last screen was captured and included in the recently used applications list. In an event, a user accesses or selects an image included in the recently used applications list, an application with a screen corresponding to the selected image will become active on the display. In such scenarios, a user must navigate back to other screens to get awareness of other activities which were performed on other screens, which creates inconvenience for the user.

Conventionally, several prior arts exist which disclose an adaptive recent application management, however all the prior arts merely focus on monitoring activities at an input device and further at a server device for generating recently used applications list. In general, prior arts discloses detecting and / or logging user activity on an input unit, identifying a foreground running application, hashing of a user-interface-element management list of the foreground running application, and displaying on the screens an application summary window comprising a limited list of common functions offered within an application and/or data stored in that application.

The existing prior arts only use an image of one screen to associate with applications at any point of time. Applications are typically designed with multiple screens, each associated with an operation. Therefore, having only one screen limits the functionalities which can be associated with an application, and furthermore limits the number of screens a user can navigate to at any particular point of time. For example, if a user has moved through multiple screens to perform a task and something goes wrong, user has to navigate back multiple times to reach to the desired screen. Further, in certain circumstances, a user may be interacting with multiple screens within an application simultaneously like multiple chats. In such circumstances, it becomes difficult for the user to keep track or view a summary in a single view. In one instance, a user may forget to complete some task because of switching between multiple screens within same application. Thus, having an image of only the last used screen of an application in the list of recently used applications, is associated with multiple drawbacks as illustrated above.

Therefore, there is a need to alleviate drawbacks existing in the prior arts.

US application No. 2017/357413A1 discloses a method for enhancing the viewing of applications in a preview provider. The method includes receiving an indication to provide a preview mode on a display of the computing device, providing screenshots of a plurality of applications in the preview mode such that the screenshots are accessible for viewing by a user. The method also includes identifying the first application to provide the first screenshot in an updated mode and changing a state of the first application from a suspended state to an inactive state by allocating processing time of the one or more processors to the first application, and displaying updates of the first screenshot while the first application is in the inactive state.

KR application No. 2016/0090709A discloses a mobile terminal and a controlling method thereof. The mobile terminal includes a touch screen displaying multiple thumbnails corresponding to execution screens of multiple applications and a control unit displaying the execution screen of the first application corresponding to the specific thumbnail in one section of the touch screen when a preset input is received to the specific thumbnail among the multiple thumbnails and displaying at least one of the execution screens of the second application related to an item included in the execution screen of the first application in the other section of the touch screen. According to the present invention, multitasking is possible by displaying the execution screens of the multiple applications recently executed by the simple input.

### SUMMARY OF THE DISCLOSURE

A method for managing one or more recently used applications in a mobile terminal, a mobile terminal and a computer-readable storage medium are provided as set out in the appended set of claims. The present disclosure is set out in the appended set of claims.

The present disclosure proposes an intuitive method of representing multiple images of meaningful information which recently were carried within the applications. Instead of capturing an image of a last used screen of an application as described in prior arts, multiple images corresponding to different screens of the application are captured. Out of the captured screens, a plurality of screens are selected based on a usage pattern. Based on the selected images, a list of recently used applications is generated which comprises multiple different screens of all the recently used applications. Furthermore, screens corresponding to the selected images are monitored in background for updates, and one or more images corresponding to the monitored screens are flagged in real time in an event one or more notifications for the applications have been received. For example, users may see the recent most activities that they carried out, be it chats with multiple contacts, the online Orders, the most recent news articles, within the application. In an interface of a list of the recently used applications, multiple images corresponding to different activities, such as the chats with multiple contacts, the online Orders, and/or the most recent news articles, may be displayed simultaneously which provides convenience to users to review their recent activities and to go to a particular screen of any application at any time.

### BRIEF DESCRIPTION OF THE DRAWINGS

The accompanying drawings, which are incorporated herein, and constitute a part of this present disclosure, illustrate exemplary embodiments of the disclosed methods and systems in which like reference numerals refer to the same parts throughout the different drawings. Components in the drawings are not necessarily to scale, emphasis instead being placed upon clearly illustrating the principles of the present disclosure. Some drawings may indicate the components using block diagrams and may not represent the internal circuitry of each component. It will be appreciated by those skilled in the art that disclosure of such drawings includes disclosure of electrical components or circuitry commonly used to implement such components. The connections between the sub-components of a component have not been shown in the drawings for the sake of clarity, therefore, all sub-components shall be assumed to be connected to each other unless explicitly otherwise stated in the present disclosure herein.
Fig. 1 illustrates an architectural block diagram of a mobile terminal, in accordance with the embodiments of the present disclosure.
Fig. 2 is an exemplary flow diagram illustrating a method for managing one or more recently used applications in the mobile terminal of FIG. 1, in accordance with an embodiment of the present disclosure.
Fig. 3 is another exemplary flow diagram, illustrating the method for managing one or more recently used applications in the mobile terminal of FIG. 1, in accordance with another embodiment of the present disclosure.
Fig. 4 is another exemplary flow diagram, illustrating the method for managing one or more recently used applications in the mobile terminal of FIG. 1, in accordance with exemplary embodiments of the present disclosure.
Fig. 5 illustrates an exemplary scenario implementing a method of the present invention in a mobile terminal, in accordance with embodiments of the present disclosure.
Fig. 6 illustrates another exemplary scenario illustrating flagging of one or more images in real-time, in accordance with other embodiments of the present disclosure.

### DETAILED DESCRIPTION

In the following description, for the purposes of explanation, various specific details are set forth in order to provide a thorough understanding of embodiments of the present disclosure. It will be apparent, however, these embodiments may be practiced without these specific details. Several features described hereafter can each be used independently of one another or with any combination of other features. An individual feature may not address any of the problems discussed above or might address only one of the problems discussed above.

The present disclosure proposes an intuitive method of representing multiple images of meaningful information which recently were carried within the applications. Instead of capturing an image of a last used screen of an application as described in prior arts, multiple images corresponding to different screens of the application are captured. Out of the captured screens, a plurality of screens are selected based on a usage pattern. Based on the selected images, a list of recently used applications is generated which comprises multiple different screens of all the recently used applications. Furthermore, screens corresponding to the selected images are monitored in background for updates, and one or more images corresponding to the monitored screens are flagged in real time in an event one or more notifications for the applications have been received. For example, users may see the recent most activities that they carried out, be it chats with multiple contacts, the online Orders, the most recent news articles, within the application. In an interface of a list of the recently used applications, multiple images corresponding to different activities, such as the chats with multiple contacts, the online Orders, and/or the most recent news articles, may be displayed simultaneously which provides convenience to users to review their recent activities and to go to a particular screen of any application at any time.

As used herein, "application" or "applications" or "apps" are the software applications residing in respective electronic communication devices and can be either pre-installed or can be downloaded and installed in said devices. The applications include, but are not limited to, contact management application, calendar application, messaging applications, image and/or video modification and viewing applications, gaming applications, navigational applications, office applications, business applications, educational applications, health and fitness applications, medical applications, finance applications, social networking applications, and any other application. The application uses "data" that can be created, modified or installed in an electronic device over time. The data includes, but is not limited to, contacts, calendar entries, call logs, SMS, images, videos, factory data, emails and data associated with one or more applications.

As used herein, "couple" and its cognate terms, such as "couples" and "coupled" includes a physical connection (such as a conductor), a virtual connection (such as through randomly assigned memory locations of data memory device), a logical connection (such as through logical gates of semiconducting device), other suitable connections, or a combination of such connections, as may be obvious to a skilled person.

As used herein, "mobile terminal" includes, but is not limited to, a mobile phone, a wearable device, smart phone, laptop, a general-purpose computer, personal digital assistant, tablet computer, or any other computer implemented electronic device that can execute applications, as may be known to a person skilled in the art.

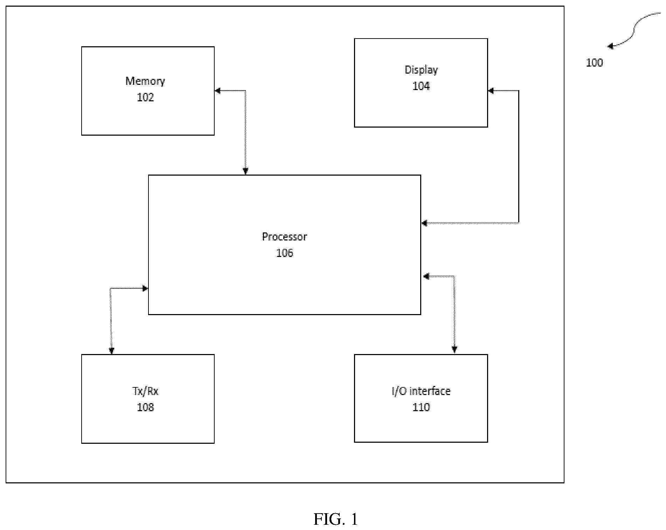

Fig. 1 illustrates an architectural block diagram of a mobile terminal [100] in an embodiment. The mobile terminal [100] may include one or more processors, such as a processor [106], one or more memory, such as memory [102], a transceiver [108], one or more I/O interfaces, such as an I/O interface [110] and a display [104]. The processor [106] is communicably coupled with the transceiver [108] to receive signals from an external device, such as a server or any other wireless network device. Further, the transceiver [108] may be configured to transmit signals generated by the processor [106]. In one embodiment, the processor [106] may include one or more processors, microprocessors, application specific integrated circuits (ASICs), field programmable gate arrays (FPGAs), and the like. The processor [106] may process information received via the transceiver [108] and/or the I/O interface [110]. In one embodiment, the memory [102] may include a random-access memory (RAM), a read-only memory (ROM), and/or another type of memory to store data and instructions that may be used by the processor [106]. The processor [106] may be in communication with the memory [102], wherein the memory [102] may comprise program modules such as routines, programs, objects, components, data structures and the like, which perform particular tasks to be executed by the processor [106]. In one embodiment, the display [104] may be touch responsive display and may be utilized to receive inputs from a user using the mobile terminal [100]. In another embodiment, the I/O interface [110] may be used to receive inputs from a user. In one exemplary embodiment, the I/O interface [110] may include a variety of software and hardware interfaces, for instance, interface for peripheral device(s) such as a keyboard, a mouse, a scanner, an external memory, a printer and the like.

In one embodiment, the mobile terminal [100] may perform certain operations in response to the processor [106] executing software instructions of an application contained in a computer-readable medium, such as memory [102]. A computer-readable medium may be defined as a physical or logical memory device. A logical memory device may include memory space within a single physical memory device or spread across multiple physical memory devices. The software instructions may be read into memory [106] from another computer-readable medium or from another device via the transceivers [108]. The software instructions contained in the memory [102] may cause the processor [106] to perform processes described herein. Alternatively, hardwired circuitry may be used in place of or in combination with software instructions to implement processes described herein. Thus, embodiments described herein are not limited to any specific combination of hardware circuitry and software.

Although FIG. 1 shows exemplary components of the mobile terminal [100], in other embodiments, the mobile terminal [100] may contain fewer, different, differently arranged, or additional components than depicted in FIG. 1. Alternatively, or additionally, one or more components of the mobile terminal [100] may perform one or more other tasks described as being performed by one or more other components of the mobile terminal [100].

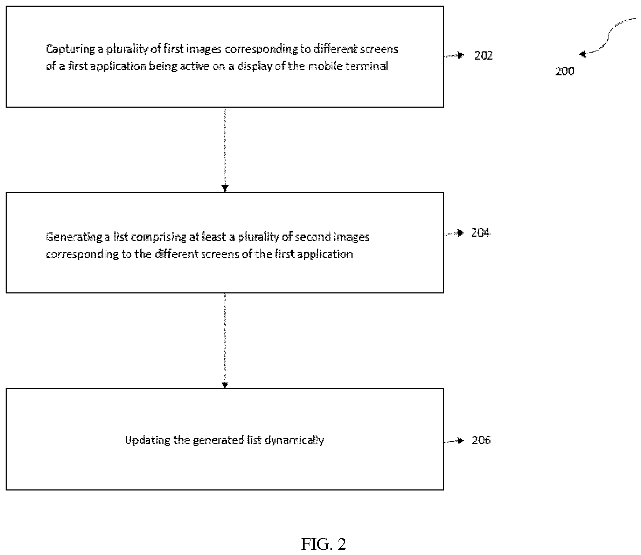

Referring to FIG. 2, there is illustrated a simplified flow diagram of a method for managing one or more recently used applications in a mobile terminal. Beginning at step [202], the processor [106] of the mobile terminal [100] captures a plurality of first images corresponding to different screens of a first application which is being displayed on a display [104] of the mobile terminal [100]. The plurality of first images are captured in an event a transition activity is performed on the first application being displayed. The plurality of first images correspond to different screens of the first application being displayed on the display [104].

At step [204], the processor [106] generates a list comprising at least a plurality of second images, wherein the plurality of second images are generated selected from the first images. In one embodiment, the list further includes one or more images of corresponding to different screens of other recently used applications other than the first application. Further, at step [206], the generated list is updated dynamically depending on one or more notifications received for the first application and other recently used application.

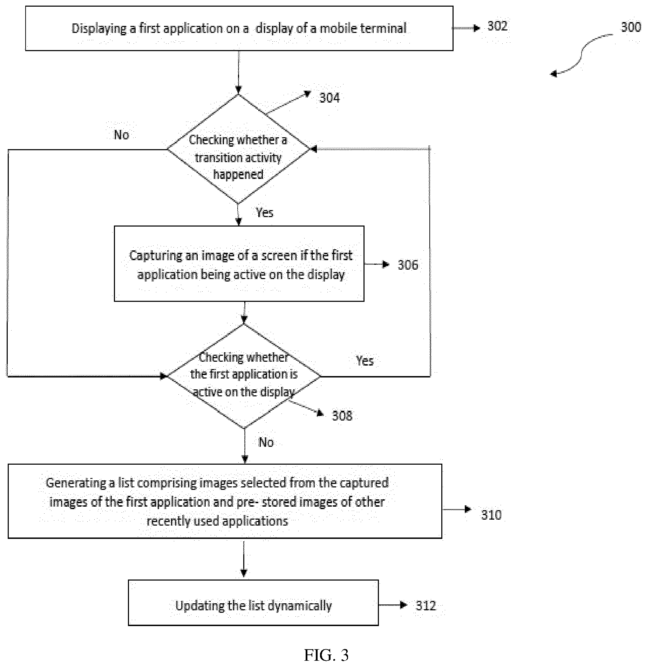

Referring to FIG. 3, a flow diagram is illustrated which describes the method of FIG. 2 in more detail. Beginning at step [302], a first application is displayed on the display [104] of the mobile terminal [100]. In response to the displaying of the first application, the processor [106] determines whether a transition activity is performed on the first application being displayed on the display [104] based on one or more user inputs received from a user. In one embodiment, the one or more user inputs are received by the mobile terminal [100] through the display [104]. In another embodiment, the one or more user inputs are received by the processor [106] through the I/O interface [110]. In one embodiment, the transition activity refers to transitioning from one screen of an application to another screen of the application. In one embodiment, the processor [106] is continuously monitor whether the transition activity is performed on the first application by determining whether the user has given the one or more user inputs to make a transition from one screen to another screen.

At step [304], the processor [106] determines whether the transition activity has happened on the first application. In an event, the transition activity has happened, step [306] is performed. At step [306], the processor [106] captures an image of a screen of the first application, which is being currently displayed on the display [104] before the transition of screen takes place. In an event, at step [306], the processor [106] determines that the transition activity has not happened on the first application being displayed, step [308] is performed by the processor [106].

At step [308], the processor [106] determines whether the first application is still active on the display [104]. The processor [106] determines that the first application is active on the display [104] in an event the first application is running in the foreground of the operating system of the mobile terminal [100]. The moment, the first application is not running in the foreground and has been shifted to the background, the processor [106] determines that the application is not active on the display [104] of the mobile terminal [100]. At step [308], if the processor [106] determines that the first application is still active on the display [104], steps [304] and [306] are performed again by the processor [106]. Therefore, steps [304] and [306] are repeated again and again to generate the plurality of first images as described with reference to FIG. 2, until the processor [106] determines at step [308] that the first application is not active on the display [104]. In one embodiment, at the time of generating the first images, the processor [106] may generate a unique identifier for each of the first images, wherein using the unique identifiers, each of the first images are linked to their respective screens of the first application. In an event, if the processor determines that the first application is not active on the display [104], step [310] is performed by the processor [106].

At step [310], the processor [106] processes the images being captured at step [306] and selects at least two images from the captured images to generate the plurality of second images as described with reference to FIG. 2. The selected images i.e., the plurality of second images are used to generate a list which is the list of recently used applications. In one embodiment, the list may include the selected images along with other images of other recently used applications different from the first application. In another embodiment, the list may only include the selected images. In one embodiment, the at least two images are selected from the captured images based on a usage pattern associated with the first application. The usage pattern is a historical data corresponding to user behavior with respect to the first application. In one exemplary embodiment, user behavior data generated over predetermined number of days may be used as the usage pattern. Herein, the user behavior includes data corresponding to user actions performed by the user on different screens of the first application. In one embodiment, the processor [106] may use machine learning algorithms to determine the usage pattern associated with the first application. Based on the determined usage pattern, the processor [106] selects the at least two images i.e, the plurality of second images from the captured images. At step [312], the processor [106] may update the generated list dynamically.

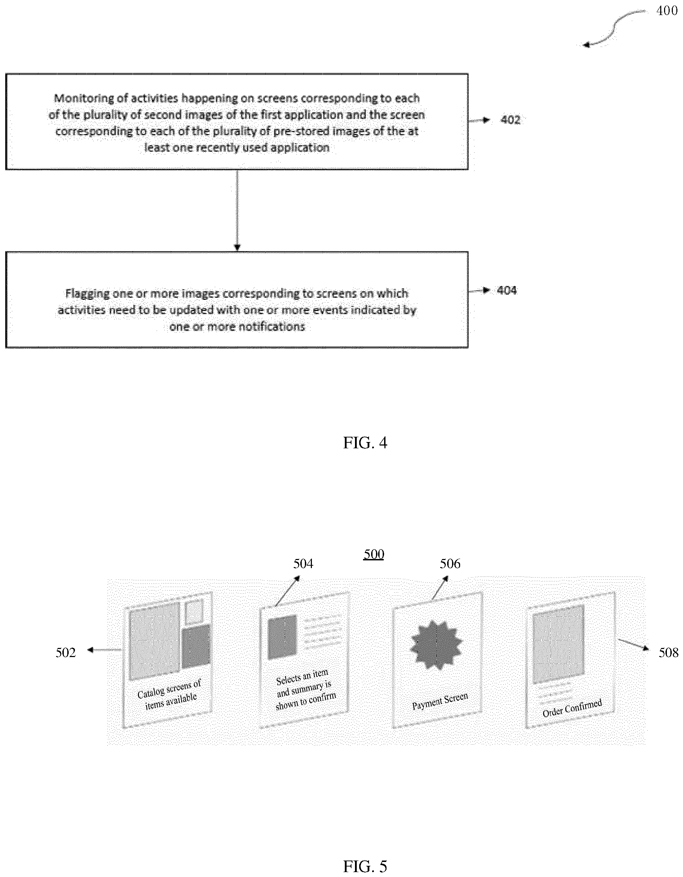

Referring to FIG. 4, a simplified flow diagram illustrating dynamic updating of a generated list, is disclosed. Beginning at step [402], the processor [106] may monitor activities on screens corresponding to the plurality of second images included in the generated list. As described above, the plurality of second images are the selected images from the plurality of first images. In an event, the first application is not active and has been pushed into the background, the processor [106] may monitor in background, the screens which correspond to the plurality of second images included in the generated list. Furthermore, the processor [106] may monitor screens corresponding to the pre-stored images of other recently used applications, included in the generated list.

At step [404], the processor [106] checks whether one or more notifications have been received for the first application and other recently used applications. In an event, the processor [106] determines that the one or more notifications have been received for the first application and/or for other recently used applications, the processor [106] may further determine activities on the screens of the first application and other applications, which needs to be updated based on the received notifications. The images for screens on which activities needs to be updated, are flagged in real-time so as to update the list of recently used applications dynamically. In one embodiment, the images may be flagged using any one of: audio notification, video notification, and/or an audio-visual notification.

Referring to FIG. 5, an exemplary scenario has been illustrated where the method may be implemented. As shown, an application is active on a display of a mobile terminal. The application may comprise different screens for different user activities, such as screens 502, 504, 506, and 508. As the user transitions from screen 502 to screen 506, an image of the screen 502 may be captured by a processor of the mobile terminal. Similarly, when there will be further transitions from screens 504 to 506 and further from 506 to 508, and so on, images corresponding to the screens 504, 506, and 508 may be captured. In one embodiment, two or more images from the captured images may be selected and may be included in a list of recently used applications.

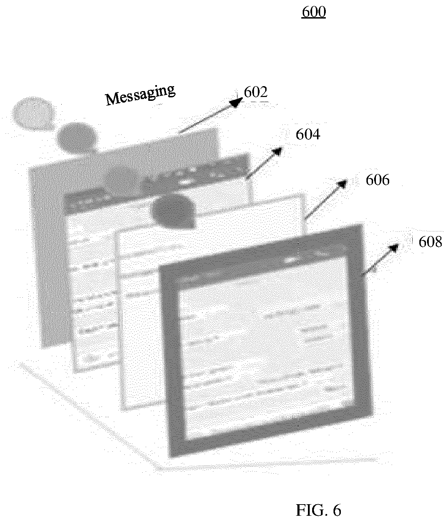

Referring to FIG. 6, flagging of captured images in the list of recently used applications, is shown. As indicated, images 602, 604, and 606 have been flagged visually. The images 602, 604, and 606 are flagged which indicates that screens corresponding to the images 602, 604, and 606 have received updates based on the received one or more notifications.

As used herein, a "processor" refers to any logic circuitry for processing instructions. A processor may be a special purpose processor or plurality of microprocessors, wherein one or more microprocessors may be associated with at least one controller, a microcontroller, Application Specific Integrated Circuits (ASICs), Field Programmable Gate Array (FPGAs) circuits, and any other type of integrated circuit (IC), etc. Among other capabilities, the processor is also configured to fetch and execute computer-readable instructions and data stored in a memory or a data storage device.

As used herein, a "memory" or "repository" refers to any non-transitory media that stores data and/or instructions that cause a machine to operate in a specific manner. The memory may include a volatile memory or a non-volatile memory. Non-volatile memory includes, for example, magnetic disk, optical disk, solid state drives, or any other storage device for storing information and instructions. Volatile memory includes, for example, a dynamic memory. The memory may be a single or multiple, coupled or independent, and encompasses other variations and options of implementation as may be obvious to a person skilled in the art.

In FIG. 1, the processor, memory, and various other components are interconnected to each other, for example, using a communication bus. The "communication bus" or a "bus" includes hardware, software and communication protocol used by the bus to facilitate transfer of data and/or instructions. The communication bus facilitates transfer of data, information and content between these components.

While considerable emphasis has been placed herein on the disclosed embodiments, it will be appreciated that changes can be made to the embodiments without departing from the principles of the present disclosure. These and other changes in the embodiments of the present disclosure shall be within the scope of the present disclosure and it is to be understood that the foregoing descriptive matter is illustrative and non-limiting.

## Claims

1. A method for managing one or more recently used applications in a mobile terminal (100), **characterized by** comprising:
capturing (202) a plurality of first images corresponding to different screens of a first application being active on a display (104) of the mobile terminal (100), the plurality of first images being captured in an event where a transition activity is performed on the first application, wherein the transition activity comprises transitioning from one screen to another screen of the first application, and the plurality of first images are images of the different screens of the first application displayed on the display (104) before the transition activity takes place;
generating (204) a list comprising at least a plurality of second images corresponding to the different screens of the first application, the list being generated in an event where the first application is not active on the display (104) of the mobile terminal (100) and the plurality of second images being selected from the captured plurality of first images; and
updating (206) the generated list, wherein at least one of the plurality of second images of the first application are flagged in an event where one or more notifications have been received for the first application.

2. The method as claimed in claim 1, wherein the list further comprises a plurality of pre-stored images corresponding to different screens of at least one recently used application other than the first application, and wherein at least one of the plurality of pre-stored images are flagged in real-time, in an event one or more notifications have been received for the at least one recently used application.

3. The method as claimed in claim 1, wherein capturing (202) further comprises:
selecting at least two images from the captured plurality of first images to generate the plurality of second images, wherein the at least two images are selected based on a usage pattern associated with the first application.

4. The method as claimed in claim 3, wherein the usage pattern comprises historical data corresponding to user behavior with respect to the first application.

5. The method as claimed in claim 4, wherein the user behavior comprises data corresponding to user actions performed by a user on different screens of the first application.

6. The method as claimed in claim 2, wherein the updating (206) comprises:
monitoring (402) activities happening on screens corresponding to each of the plurality of second images of the first application and the screens corresponding to each of the plurality of pre-stored images of the at least one recently used application; and
flagging (404) one or more images corresponding to screens on which activities need to be updated with one or more events indicated by the one or more notifications.

7. The method as claimed in claim 1, wherein the plurality of second images and the plurality of pre-stored images are flagged using at least one of: an audio notification, a visual notification, or an audio-visual notification.

8. A mobile terminal (100) managing one or more recently used applications, the mobile terminal (100) comprising:
a display (104) configured to display a first application;
an I/O interface (110) configured to receive one or more user inputs in response to the displaying of the first application on the display (104); and
a processor (106) communicatively coupled to the display (104) and the I/O interface (110), **characterized by** the processor (106) being configured to:
capture (202) a plurality of first images corresponding to different screens of the first application being active on the display (104) of the mobile terminal (100), the plurality of first images are captured in an event a transition activity is performed on the first application, wherein based on the received one or more user inputs, the processor (106) is configured to determine that the transition activity is performed on the first application, wherein the transition activity comprises transitioning from one screen to another screen of the first application, and the plurality of first images are images of the different screens of the first application displayed on the display (104) before the transition activity takes place;
generate (204) a list comprising at least a plurality of second images corresponding to the different screens of the first application, the list being generated in an event where the first application is not active on the display (104) of the mobile terminal (100), the plurality of second images being selected from the captured plurality of first images; and
updating (206) the generated list, wherein at least one of the plurality of second images of the first application are flagged, in an event where one or more notifications have been received for the first application.

9. The mobile terminal (100) as claimed in claim 8, wherein the list further comprises a plurality of pre-stored images corresponding to different screens of at least one recently used application other than the first application, and wherein at least one of the plurality of pre-stored images are flagged in real-time, in an event one or more notifications have been received for the at least one recently used application.

10. The mobile terminal (100) as claimed in claim 8, wherein the processor (106) is configured to select at least two images from the captured plurality of first images to generate the plurality of second images, wherein the at least two images are selected based on a usage pattern associated with the first application.

11. The mobile terminal (100) as claimed in claim 10, wherein the usage pattern comprises historical data corresponding to user behavior with respect to the first application.

12. The mobile terminal (100) as claimed in claim 9, wherein the processor (106) is configured to:
monitor (402) activities happening on screens corresponding to each of the plurality of second images of the first application and the screens corresponding to each of the plurality of pre-stored images of the at least one recently used application; and
update (404) the monitored activities with one or more events indicated by the one or more notifications being received.

13. The mobile terminal (100) as claimed in claim 9, wherein the plurality of second images and the plurality of pre-stored images are flagged by the processor (106) by using at least one of: an audio notification, a visual notification, or an audio-visual notification.

14. A computer-readable storage medium, storing a computer program; **characterized in that** the computer program is executable by a processor (106) to perform the method according to any one of claims 1-7.

## Patentansprüche

1. Verfahren zum Verwalten einer oder mehrerer kürzlich verwendeter Anwendungen in einem mobilen Endgerät (100), **gekennzeichnet durch** Umfassen:
Erfassen (202) einer Vielzahl von ersten Bildern, die verschiedenen Bildschirmen einer ersten Anwendung entsprechen, die auf einem Display (104) des mobilen Endgeräts (100) aktiv ist, wobei die Vielzahl von ersten Bildern in einem Fall erfasst wird, in dem eine Übergangsaktivität auf der ersten Anwendung durchgeführt wird, wobei die Übergangsaktivität einen Übergang von einem Bildschirm zu einem anderen Bildschirm der ersten Anwendung umfasst, und die Vielzahl von ersten Bildern Bilder der verschiedenen Bildschirme der ersten Anwendung sind, die auf dem Display (104) angezeigt werden, bevor die Übergangsaktivität stattfindet;
Erzeugen (204) einer Liste, die mindestens eine Vielzahl von zweiten Bildern umfasst, die den verschiedenen Bildschirmen der ersten Anwendung entsprechen, wobei die Liste in einem Fall erzeugt wird, in dem die erste Anwendung auf dem Display (104) des mobilen Endgeräts (100) nicht aktiv ist und die Vielzahl der zweiten Bilder aus der erfassten Vielzahl der ersten Bilder ausgewählt wird; und
Aktualisieren (206) der erzeugten Liste, wobei mindestens eines der Vielzahl von zweiten Bildern der ersten Anwendung in einem Fall markiert wird, in dem eine oder mehrere Benachrichtigungen für die erste Anwendung empfangen wurden.

2. Verfahren nach Anspruch 1, wobei die Liste ferner eine Vielzahl von vorgespeicherten Bildern umfasst, die verschiedenen Bildschirmen mindestens einer kürzlich verwendeten Anwendung entsprechen, die nicht die erste Anwendung ist, und wobei mindestens eines der Vielzahl von vorgespeicherten Bildern in Echtzeit markiert wird, wenn eine oder mehrere Benachrichtigungen für die mindestens eine kürzlich verwendete Anwendung empfangen wurden.

3. Verfahren nach Anspruch 1, wobei das Erfassen (202) ferner umfasst:
Auswählen von mindestens zwei Bildern aus der erfassten Vielzahl von ersten Bildern, um die Vielzahl von zweiten Bildern zu erzeugen, wobei die mindestens zwei Bilder basierend auf einem mit der ersten Anwendung verbundenen Nutzungsmuster ausgewählt werden.

4. Verfahren nach Anspruch 3, wobei das Nutzungsmuster historische Daten umfasst, die dem Nutzerverhalten in Bezug auf die erste Anwendung entsprechen.

5. Verfahren nach Anspruch 4, wobei das Benutzerverhalten Daten umfasst, die den durch einen Benutzer auf verschiedenen Bildschirmen der ersten Anwendung durchgeführten Benutzeraktionen entsprechen.

6. Verfahren gemäß Anspruch 2, wobei das Aktualisieren (206) umfasst:
Überwachen (402) von Aktivitäten, die auf Bildschirmen stattfinden, die jedem der Vielzahl von zweiten Bildern der ersten Anwendung und den Bildschirmen entsprechen, die jedem der Vielzahl von vorgespeicherten Bildern der mindestens einen kürzlich verwendeten Anwendung entsprechen; und
Markieren (404) eines oder mehrerer Bilder, die Bildschirmen entsprechen, auf denen Aktivitäten mit einem oder mehreren Ereignissen aktualisiert werden müssen, die durch die eine oder die mehreren Benachrichtigungen angegeben werden.

7. Verfahren nach Anspruch 1, wobei die Vielzahl von zweiten Bildern und die Vielzahl von vorgespeicherten Bildern unter Verwendung von mindestens einem gekennzeichnet werden von: einer akustischen Benachrichtigung, einer visuellen Benachrichtigung oder einer audiovisuellen Benachrichtigung.

8. Mobiles Endgerät (100), das eine oder mehrere kürzlich verwendete Anwendungen verwaltet, wobei das mobile Endgerät (100) umfasst:
ein Display (104), das zum Anzeigen einer ersten Anwendung ausgelegt ist;
eine E/A-Schnittstelle (110), die dazu ausgelegt ist, eine oder mehrere Benutzereingaben als Reaktion auf die Anzeige der ersten Anwendung auf dem Display (104) zu empfangen; und
einen Prozessor (106), der kommunikativ mit dem Display (104) und der E/A-Schnittstelle (110) gekoppelt ist, **dadurch gekennzeichnet, dass** der Prozessor (106) dazu ausgelegt ist:
eine Vielzahl von ersten Bildern zu erfassen (202), die verschiedenen Bildschirmen der ersten Anwendung entsprechen, die auf dem Display (104) des mobilen Endgeräts (100) aktiv sind, wobei die Vielzahl von ersten Bildern in einem Fall erfasst wird, in dem eine Übergangsaktivität in der ersten Anwendung durchgeführt wird, wobei basierend auf der empfangenen einen oder den empfangenen mehreren Benutzereingaben, der Prozessor (106) dazu ausgelegt ist, zu bestimmen, dass die Übergangsaktivität in der ersten Anwendung durchgeführt wird, wobei die Übergangsaktivität einen Übergang von einem Bildschirm zu einem anderen Bildschirm der ersten Anwendung umfasst, und die Vielzahl von ersten Bildern Bilder der verschiedenen Bildschirme der ersten Anwendung sind, die auf dem Display (104) angezeigt werden, bevor die Übergangsaktivität stattfindet;
eine Liste zu erzeugen (204), die mindestens eine Vielzahl von zweiten Bildern umfasst, die den verschiedenen Bildschirmen der ersten Anwendung entsprechen, wobei die Liste in einem Fall erzeugt wird, in dem die erste Anwendung auf des Displays (104) des mobilen Endgeräts (100) nicht aktiv ist, wobei die Vielzahl von zweiten Bildern aus der erfassten Vielzahl von ersten Bildern ausgewählt wird; und
Aktualisieren (206) der erzeugten Liste, wobei mindestens eines der Vielzahl von zweiten Bildern der ersten Anwendung in einem Fall markiert wird, in dem eine oder mehrere Benachrichtigungen für die erste Anwendung empfangen wurden.

9. Mobiles Endgerät (100) nach Anspruch 8, wobei die Liste ferner eine Vielzahl von vorgespeicherten Bildern umfasst, die verschiedenen Bildschirmen von mindestens einer kürzlich verwendeten Anwendung entsprechen, die nicht die erste Anwendung ist, und wobei mindestens eines der Vielzahl von vorgespeicherten Bildern in Echtzeit markiert wird, wenn eine oder mehrere Benachrichtigungen für die mindestens eine kürzlich verwendete Anwendung empfangen wurden.

10. Mobiles Endgerät (100) nach Anspruch 8, wobei der Prozessor (106) dazu ausgelegt ist, mindestens zwei Bilder aus der erfassten Vielzahl von ersten Bildern auszuwählen, um die Vielzahl von zweiten Bildern zu erzeugen, wobei die mindestens zwei Bilder basierend auf einem der ersten Anwendung zugeordneten Nutzungsmuster ausgewählt werden.

11. Mobiles Endgerät (100) nach Anspruch 10, wobei das Nutzungsmuster historische Daten umfasst, die dem Nutzerverhalten in Bezug auf die erste Anwendung entsprechen.

12. Mobiles Endgerät (100) nach Anspruch 9, wobei der Prozessor (106) dazu ausgelegt ist, Aktivitäten zu überwachen (402), die auf Bildschirmen stattfinden, die jedem der Vielzahl von zweiten Bildern der ersten Anwendung und den Bildschirmen entsprechen, die jedem der Vielzahl von vorgespeicherten Bildern der mindestens einen kürzlich verwendeten Anwendung entsprechen; und
die überwachten Aktivitäten mit einem oder mehreren Ereignissen zu aktualisieren (404), die durch die eine oder die mehreren empfangene(n) Nachricht(en) angegeben wird/werden.

13. Mobiles Endgerät (100) nach Anspruch 9, wobei die Vielzahl von zweiten Bildern und die Vielzahl von vorgespeicherten Bildern durch den Prozessor (106) unter Verwendung von mindestens einem gekennzeichnet werden von: einer akustischen Benachrichtigung, einer visuellen Benachrichtigung oder einer audiovisuellen Benachrichtigung.

14. Computerlesbares Speichermedium, das ein Computerprogramm speichert, **dadurch gekennzeichnet, dass** das Computerprogramm durch einen Prozessor (106) ausführbar ist, um das Verfahren nach einem der Ansprüche 1-7 durchzuführen.

## Revendications

1. Procédé de gestion d'une ou des applications utilisées récemment dans un terminal mobile (100), **caractérisé en ce qu'**il comprend :
la capture (202) d'une pluralité de premières images correspondant à des écrans différents d'une première application qui est active sur un dispositif d'affichage (104) du terminal mobile (100), la pluralité de premières images étant capturées dans un événement où une activité de transition est exécutée sur la première application, dans lequel l'activité de transition comprend la transition d'un écran à un autre écran de la première application, et la pluralité de premières images sont des images des écrans différents de la première application affichée sur le dispositif d'affichage (104) avant que l'activité de transition n'ait lieu ;
la génération (204) d'une liste comprenant au moins une pluralité de deuxièmes images correspondant aux écrans différents de la première application, la liste étant générée dans un événement où la première application n'est pas active sur le dispositif d'affichage (104) du terminal mobile (100) et la pluralité de deuxièmes images étant sélectionnées à partir de la pluralité de premières images capturées ; et
la mise à jour (206) de la liste générée, dans lequel au moins une de la pluralité de deuxièmes images de la première application sont marquées dans un événement où une ou des notifications ont été reçues pour la première application.

2. Procédé selon la revendication 1, dans lequel la liste comprend en outre une pluralité d'images pré-stockées correspondant à différents écrans d'au moins une application utilisée récemment autre que la première application, et dans lequel au moins une de la pluralité d'images pré-stockées sont marquées en temps réel, dans un événement une ou des notifications ont été reçues pour l'au moins une application utilisée récemment.

3. Procédé selon la revendication 1, dans lequel la capture (202) comprend en outre :
la sélection d'au moins deux images à partir de la pluralité de premières images capturées pour générer la pluralité de deuxièmes images, dans lequel les deux images, ou plus, sont sélectionnées sur la base d'un modèle d'utilisation associé à la première application.

4. Procédé selon la revendication 3, dans lequel le modèle d'utilisation comprend des données historiques correspondant à un comportement d'utilisateur par rapport à la première application.

5. Procédé selon la revendication 4, dans lequel le comportement d'utilisateur comprend des données correspondant à des actions d'utilisateurs exécutées par un utilisateur sur différents écrans de la première application.

6. Procédé selon la revendication 2, dans lequel la mise à jour (206) comprend :
la surveillance (402) d'activités se produisant sur des écrans correspondant à chacune de la pluralité de deuxièmes images de la première application et les écrans correspondant à chacune de la pluralité d'images pré-stockées de l'au moins une application utilisée récemment ; et
le marquage (404) d'une ou des images correspondant aux écrans sur lesquels des activités doivent être mises à jour avec un ou des événements indiqués par l'une ou les notifications.

7. Procédé selon la revendication 1, dans lequel la pluralité de deuxièmes images et la pluralité d'images pré-stockées sont marquées en utilisant au moins une parmi : une notification audio, une notification visuelle ou une notification audiovisuelle.

8. Terminal mobile (100) gérant une ou des applications utilisées récemment, le terminal mobile (100) comprenant :
un dispositif d'affichage (104) configuré pour afficher une première application ;
une interface E/S (110) configurée pour recevoir une ou des entrées d'utilisateurs en réponse à l'affichage de la première application sur le dispositif d'affichage (104) ; et
un processeur (106) couplé de manière communicative au dispositif d'affichage (104) et à l'interface E/S (110), **caractérisé par** le processeur (106) qui est configuré pour :
capturer (202) une pluralité de premières images correspondant à différents écrans de la première application qui est active sur le dispositif d'affichage (104) du terminal mobile (100), la pluralité de premières images sont capturées dans un événement où une activité de transition est exécutée sur la première application, dans lequel sur la base d'une ou des entrées d'utilisateurs reçues, le processeur (106) est configuré pour déterminer que l'activité de transition est exécutée sur la première application, dans lequel l'activité de transition comprend la transition d'un écran à un autre écran de la première application, et la pluralité de premières images sont des images des écrans différents de la première application affichée sur le dispositif d'affichage (104) avant que l'activité de transition n'ait lieu ;
générer (204) une liste comprenant au moins une pluralité de deuxièmes images correspondant à des écrans différents de la première application, la liste étant générée dans un événement où la première application n'est pas active sur le dispositif d'affichage (104) du terminal mobile (100), la pluralité de deuxièmes images étant sélectionnées à partir de la pluralité de premières images capturées ; et
mettre à jour (206) la liste générée, dans lequel au moins une de la pluralité de deuxièmes images de la première application sont marquées, dans un événement où une ou des notifications ont été reçues pour la première application.

9. Terminal mobile (100) selon la revendication 8, dans lequel la liste comprend en outre une pluralité d'images pré-stockées correspondant à différents écrans d'au moins une application utilisée récemment autre que la première application, et dans lequel au moins une de la pluralité d'images pré-stockées sont marquées en temps réel, dans un événement une ou des notifications ont été reçues pour l'au moins une application utilisée récemment.

10. Terminal mobile (100) selon la revendication 8, dans lequel le processeur (106) est configuré pour sélectionner au moins deux images à partir de la pluralité de premières images capturées pour générer la pluralité de deuxièmes images, dans lequel les deux images, ou plus, sont sélectionnées sur la base d'un modèle d'utilisation associé à la première application.

11. Terminal mobile (100) selon la revendication 10, dans lequel le modèle d'utilisation comprend des données historiques correspondant à un comportement d'utilisateur par rapport à la première application.

12. Terminal mobile (100) selon la revendication 9, dans lequel le processeur (106) est configuré pour :
surveiller (402) des activités se produisant sur des écrans correspondant à chacune de la pluralité de deuxièmes images de la première application et les écrans correspondant à chacune de la pluralité d'images pré-stockées de l'au moins une application utilisée récemment ; et
mettre à jour (404) les activités surveillées avec un ou des événements indiqués par l'une ou les notifications qui sont reçues.

13. Terminal mobile (100) selon la revendication 9, dans lequel la pluralité de deuxièmes images et la pluralité d'images pré-stockées sont marquées par le processeur (106) en utilisant au moins une parmi : une notification audio, une notification visuelle ou une notification audiovisuelle.

14. Support de stockage lisible par ordinateur, stockant un programme informatique ; **caractérisé en ce que** le programme informatique est exécutable par un processeur (106) pour mettre en œuvre le procédé selon l'une quelconque des revendications 1 à 7.
